# EUROPEAN PATENT SPECIFICATION

(11) **EP 0 317 327 B1**
(45) Date of publication and mention of the grant of the patent: **19.10.1994**
(21) Application number: 88310892.0
(22) Date of filing: 18.11.1988
(51) Int. Cl.: F16F 9/348

(54) **Hydraulic shock absorber**
Hydraulischer Stossdämpfer
Amortisseur de chocs hydraulique

(30) Priority: 19.11.1987 JP 292586/87
(43) Date of publication of application: 24.05.1989
(73) Proprietor: UNISIA JECS CORPORATION, Atsugi-shi Kanagawa-ken (JP)
(72) Inventor: Yamaoka, Fumiyuki, Atsugi-shi Kanagawa-ken (JP)
(74) Representative: Blanco White, Henry Nicholas

(56) References cited:
- DE-A- 3 246 866
- FR-A- 2 420 693
- FR-A- 2 426 187
- FR-A- 2 500 899
- FR-A- 2 608 243

## Description

### BACKGROUND OF THE INVENTION

### Field of the Invention

The present invention relates generally to a hydraulic shock absorber for absorbing shock applied thereto and is applicable to a vehicle suspension, for example. More specifically, the invention relates to a hydraulic shock absorber which has fluid passages for establishing fluid communication between upper and lower fluid chambers defined by a piston of the shock absorber.

### Description of the Prior Art

Generally, hydraulic shock absorbers have a cylinder filled with a working fluid, and a piston which divides the fluid chamber within the cylinder into upper and lower chambers. The piston is formed with a fluid passage which establishes fluid communication between the upper and lower chambers. A disk valve assembly comprising a plurality of elastic disk plates covers one end of the fluid passage. The inner portion of the disk valve assembly is fixed to the piston, and the outer portion thereof is in contact with the piston, so that a space is established between the disk valve assembly and the piston when the disk valve assembly is deformed due to the fluid pressure in the chamber of the cylinder. In such a disk assembly, fluid resistance is applied to the working fluid passing through the fluid passage, so that a predetermined damping force is applied to the piston.

In order to effectively apply a damping force to the piston when the amplitude of the piston is relatively large as well as very small, the Japanese Utility-Model First (unexamined) Publication (Jikkai Sho.) No. 60-52438 discloses an improved hydraulic shock absorber. The disclosed shock absorber has a disk valve assembly comprising a plurality of elastic disk plates, and orifice establishing fluid communication between upper and lower chambers of the cylinder is formed in one disk plate which is brought into contact with the valve seat surface of the piston. By this orifice, flow resistance is applied to the working fluid passing through the fluid passage, so that a predetermined damping force can be applied to the piston even if the amplitude of the piston is very small.

FR-A-2 420 693, on which the preambles of claims 1 and 3 are based, discloses a shock absorber having a valve assembly comprising three disk plates, in which the fluid flows axially through aligned, circumferentially-extending arcuate apertures in the first two disk plates, then radially through a restrictive orifice formed by a passage in the second disk plate between the two adjacent disk plates.

However, in such a hydraulic shock absorber, the difference between fluid pressures before and behind the disk valve assembly is relatively great. Therefore, when the working fluid which passes through the orifice has high flow velocity, vortex flow and cavitation are produced in the downstream chamber, thereby causing fluid noise of the working fluid.

It is therefore a principal object of the present invention to eliminate the aforementioned disadvantage and to provide a hydraulic shock absorber which effectively applies a damping force to a piston when the amplitude of the piston is relatively large as well as very small.

It is another object of the invention to provide a hydraulic shock absorber which can avoid vortex flow and cavitation in the downstream chamber to decrease fluid noise of the working fluid.

The invention provides a shock absorber comprising: a hollow cylinder defining therein a fluid chamber filled with a working fluid; a piston reciprocally disposed within and dividing the fluid chamber; first and second chambers for the working fluid; first and second fluid passage means establishing fluid communication between the first and second chambers; first valve means associated with the first fluid passage means, arranged to restrict the flow of the working fluid from the first chamber into the second chamber when the fluid pressure in the second chamber is less than a predetermined value, and to restrict the flow of the working fluid from the second chamber to the first chamber through the first fluid passage means; and second valve means, associated with the second fluid passage means and arranged to allow the working fluid in the second chamber to be introduced into the first chamber when the fluid pressure in said second chamber is greater than a predetermined value, and to prevent the working fluid in the first chamber from being introduced into said second chamber through the second fluid passage means; wherein the first valve means comprises a disk valve assembly having a plurality of disk plates stacked together, wherein at least one disk plate is formed with at least one circumferentially extending arcuate opening and at least one disk plate disposed between two adjacent disk plates is formed with at least one radially extending orifice passage that is downstream of the said arcuate opening in the flow path from the first chamber to the second chamber; characterised in that the first and second chambers are the chambers either side of the piston; in that the stack of disk plates defines therein first and second radially extending orifice passages each in a disk plate disposed between two adjacent disk plates; in that the said at least one arcuate opening is in a disk plate disposed between two adjacent disk plates to form a circumferential fluid passage, in that the said circumferential fluid passage is in communication with a first radially extending orifice passage upstream of it and a second radially extending orifice passage such that the fluid flowing between the first and second chambers flows circumferentially along the circumferential fluid passage between the first and second radially extending orifice passages, and the flow speed and the fluid pressure of the working fluid are both decreased in a stepwise manner.

The invention also provides a shock absorber comprising: a hollow cylinder defining therein a fluid chamber filled with a working fluid; a piston reciprocally disposed within the fluid chamber and dividing the fluid chamber into first and second chambers for the working fluid; a base valve disposed within the fluid chamber and separating the second chamber from a third chamber; first and second fluid passage means establishing fluid communication between the second and third chambers; first valve means associated with the first fluid passage means, arranged to restrict the flow of the working fluid from the second chamber into the third chamber when the fluid pressure in the third chamber is less than a predetermined value, and to restrict the flow of the working fluid from the third chamber to the second chamber through the first fluid passage means; and second valve means, associated with the second fluid passage means and arranged to allow the working fluid in the third chamber to be introduced into the second chamber when the fluid pressure in said third chamber is greater than a predetermined value, and to prevent the working fluid in the second chamber from being introduced into the third chamber through the second fluid passage means; wherein the first valve means comprises a disk valve assembly having a plurality of disk plates stacked together, wherein at least one disk plate is formed with at least one circumferentially extending arcuate opening and at least one disk plate disposed between two adjacent disk plates is formed with at least one radially extending orifice passage that is downstream of the said arcuate opening in the flow path from the second chamber to the third chamber; characterised in that the stack of disk plates defines therein first and second radially extending orifice passages each in a disk plate disposed between two adjacent disk plates; in that the said at least one arcuate opening is in a disk plate disposed between two adjacent disk plates to form a circumferential fluid passage, in that the said circumferential fluid passage is in communication with a first radially extending orifice passage upstream of it and a second radially extending orifice passage such that the fluid flowing between the second and third chambers flows circumferentially along the circumferential fluid passage between the first and second radially extending orifice passages, and the flow speed and the fluid pressure of the working fluid are both decreased in a stepwise manner.

The present invention will be understood more fully from the detailed description given herebelow and from the accompanying drawings of the preferred embodiment of the invention. However, the drawings are not intended to imply limitation of the invention to this specific embodiment, but are for explanation and understanding only.

In the drawings:
Fig. 1 is a sectional view of a first preferred embodiment of a hydraulic shock absorber according to the present invention, which illustrates main part of the shock absorber;
Figs. 2 to 6 are plan views of disk plates of a disk valve assembly used for the shock absorber of Fig. 1;
Fig. 7 is a sectional view of the disk plates of Figs. 2 to 6, which illustrates a bypassing fluid passage formed in the disk plates;

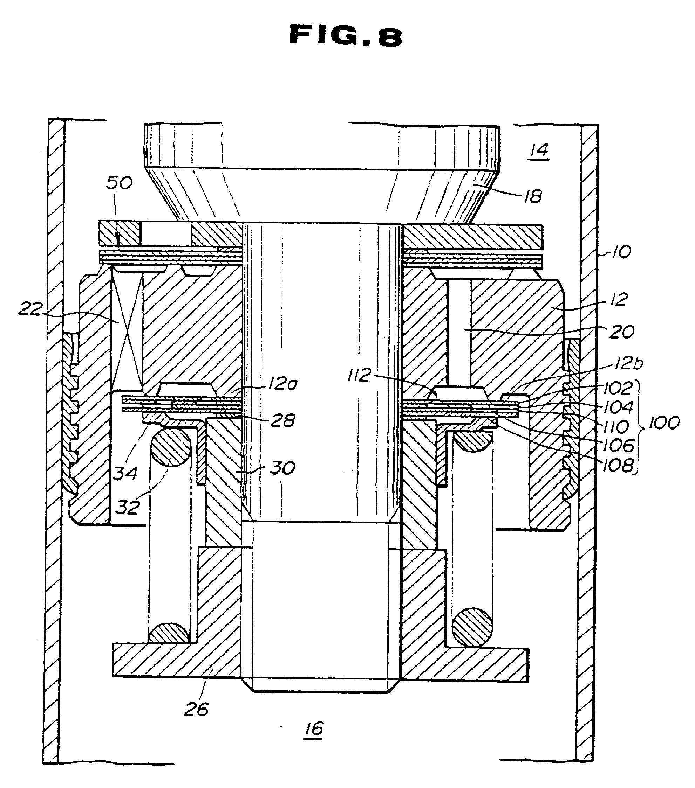

Fig. 8 is a sectional view of a second preferred embodiment of a hydraulic shock absorber according to the present invention, which illustrates main part of the shock absorber;
Figs. 9 to 13 are plan views of disk plates of a disk valve assembly used for the shock absorber of Fig. 8;
Fig. 14 is a fragmentary sectional view of the disk plates of Figs. 9 to 13, which illustrates a bypassing fluid passage formed in the disk plates;
Fig. 15 is a sectional view of a third preferred embodiment of a hydraulic shock absorber according to the present invention, which illustrates main part of the shock absorber;
Figs. 16 to 20 are plan views of disk plates of a disk valve assembly used for the shock absorber of Fig. 15;
Fig. 21 is a fragmentary sectional view of the disk plates of Figs. 16 to 20, which illustrates a bypassing fluid passage formed in the disk plates; and
Figs. 22 to 26 illustrate other modifications of the first to third preferred embodiments of the invention.

### DESCRIPTION OF THE PREFERRED EMBODIMENT

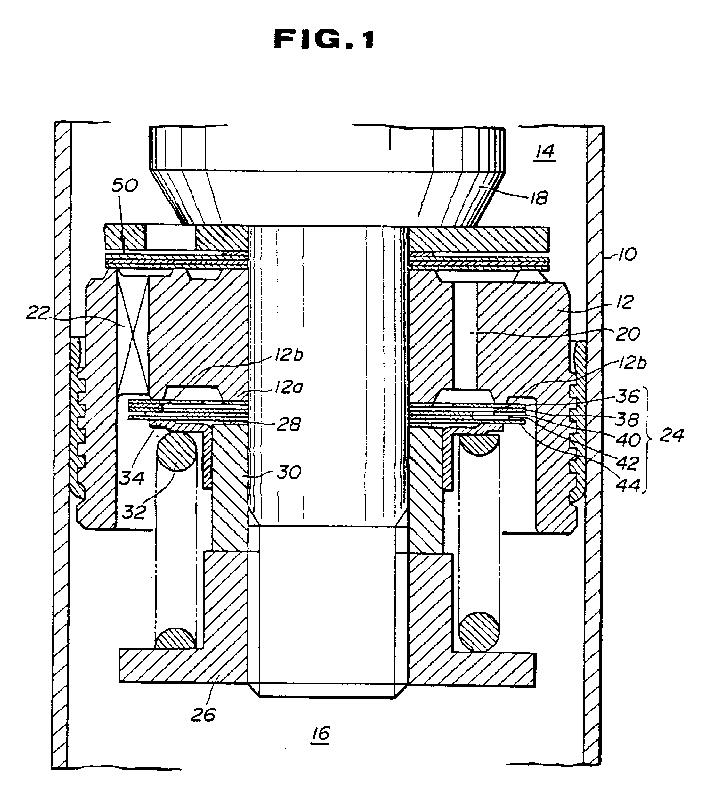

Referring now to the drawings, particularly to Figs. 1 to 5, there is illustrated a first embodiment of a hydraulic shock absorber according to the present invention. The hydraulic shock absorber comprises a hollow cylinder 10 and a piston 12 which is movably or reciprocally disposed within the cylinder 10. The cylinder 10 defines a chamber which is filled with a working fluid and which is divided into upper and lower chambers 14 and 16 by the piston 12. The piston 12 is secured to the lower end of a piston rod 18 which has an upper end extending out of the cylinder 10 and attached to a vehicle body chassis not shown. On the other hand, the lower end of the cylinder 10 is attached to a wheel axle not shown. The piston 12 is formed with a plurality of fluid passages 20 which serve to introduce the working fluid from the upper chamber 14 to the lower chamber 16, and a plurality of fluid passages 22 which serve to introduce the working fluid from the lower chamber 16 to the upper chamber 14. A disk valve assembly 24 covers the lower open ends of the fluid passages 20. The inner portion of the disk valve assembly 24 is fixed to a boss portion 12a of the piston 12 by means of a nut 26 via a washer 28 and a spacer 30. The outer portion of the disk valve assembly 24 is thrusted by means of a spring 32 via a retainer 34 to be brought into contact with a seating surface 12b of the piston 12. The retainer 34 is connected to one end of the spring 32, and is slidably supported on the outer surface of the spacer 30.

The disk valve assembly 24 comprises a plurality of elastic, annular disk plates 36, 38, 40, 42 and 44. Since the inner portion of the disk valve assembly is fixed to the boss portion 12a of the piston 12 and the outer portion thereof is thrusted into contact with the seating surface 12b of the piston 12, the disk valve assembly 24 can serve to produce a damping force in the expansion stroke, i.e. when the piston 12 moves upwardly. These disk plates 36, 38, 40, 42 and 44 will be referred herebelow to as "first disk plate", "first constant orifice plate", "second disk plate", "second constant orifice plate" and "third disk plate", respectively. The first disk plate 36 is disposed on the boss portion 12a and the seating surface 12b of the piston 12. The first constant orifice plate 38 has essentially the same diameter as that of the first disk plate 36, and is disposed on the first disk plate 36 on the opposite side to the piston 12. The second disk plate 40 has essentially the same diameter as that of the first constant orifice plate 38, and is disposed on the first constant orifice plate 38 on the opposite side to the first disk plate 36. The second constant orifice plate 42 has a smaller diameter than that of the second disk plate 40, and is disposed on the second disk plate 40 on the opposite side to the first constant orifice plate 38. The third disk plate 44 has essentially the same diameter as that of the second disk plate 40, and is disposed on the second constant orifice plate 42 on the opposite side to the second disk plate 40. An annular space 46 is formed between the second and third disk plates 40 and 44 outside the second constant orifice plate 42.

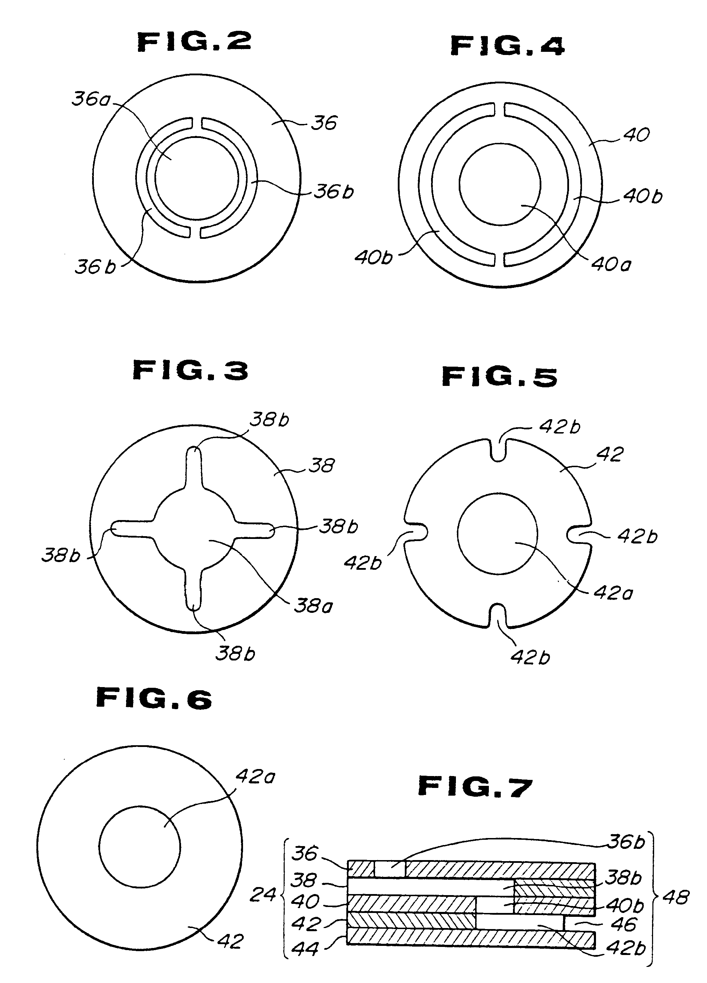

As can be seen clearly from Figs. 2 to 6, the respective disk plates 36 to 44 have a circular through openings 36a, 38a, 40a, 42a and 44a at the center thereof, the diameters of which are similar to each other. As shown in Fig. 2, the first disk plate 36 has a pair of arc-shaped through openings 36b which are arranged at locations neighboring the circular through opening 36a so as to surround essentially the entire circumference of the circular through opening 36a. The arc-shaped through openings 36b are designed to be in fluid communication with the fluid passages 20. As shown in Fig. 3, the circular through openings 38a of the first constant orifice plate 38 has four radially extending portions 38b which are so arranged as to be essentially perpendicular to each other. The radially extending portions 38b are designed to be in fluid communication with the arc-shaped through openings 36b at locations neighboring the roots thereof. The radially extending portions 38b serve as orifices and thus will be referred to as "first constant orifices". As shown in Fig. 4, the second disk plate 40 has a pair of arc-shaped through openings 40b which are so arranged as to surround essentially the entire circumference of the circular through opening 40a. The radius of curvature of the arc-shaped through opening 40b is greater than that of the arc-shaped through opening 36b of the first disk plate 36, so that the first constant orifices 38b of the first constant orifice plate 38 are in fluid communication with the arc-shaped through openings 40b at locations neighboring the tips thereof. The second constant orifice plate 42 has four U-shaped cut-outs 42b which are formed at the circumference thereof at constant intervals so as to extend radially, so that the U-shaped cut-outs 42b are designed to be in fluid communication with the arc-shaped through openings 40b. The U-shaped cut-outs 42b also serve as orifices, and thus will be referred to as "second constant orifices". As shown in Fig. 7, a bypassing fluid passage 48 comprising the arc-shaped through opening 36b, the first constant orifice 38b, the arc-shaped through opening 40b, the second constant orifice 42b and the annular space 46, is formed in the disk valve assembly 24, and thus the communication between the upper and lower chambers 14 and 16 is established by the bypassing fluid passage 48.

A disk valve assembly 50 comprising a plurality of elastic, annular disk plates covers the upper open ends of the fluid passage 22. Similar to the disk valve assembly 24, the inner portion of the disk valve assembly 50 is fixed to the piston 12, and the outer portion thereof is brought into contact with the piston 12, so that the disk valve assembly 50 serves to produce a damping force in the compression stroke, i.e. when the piston 12 moves downwardly.

With the aforementioned constructions, when the amplitude of the piston 12 is very small, the working fluid in the upper chamber 14 is introduced into the lower chamber 16 via the bypassing fluid passage 48. In this case, flow resistance is applied to the working fluid by means of the first and second constant orifices 38b and 42b which are arranged in series, and thus flow velocity and fluid pressure of the working fluid are decreased. Therefore, compared with the prior art, the difference between the fluid pressures before and behind each of the first and second constant orifices 38b and 42b is decreased, and the flow velocity of the working fluid passing through each of the orifices is decreased gradually, so that the Reynolds number of the fluid passing through the respective orifices is decreased. Therefore, it is possible to avoid vortex flow and cavitation and to decrease fluid noise due to the vortex flow and cavitation, since the fluid pressure and flow velocity of the working fluid is decreased while the working fluid passes through the bypassing fluid passages 48 before the working fluid is introduced into the lower chamber 16.

In cases where the amplitude of the piston 12 is relatively high, in the expansion stroke of the piston 12, i.e. when the piston moves upwardly, the outer portion of the disk valve assembly 24 is bent downwards against the thrusting force of the spring 32 due to fluid pressure in the upper chamber 14. As a result, a space is formed between the seating surface 12b of the piston 12 and the disk valve assembly 24, so that a great part of working fluid passing through the fluid passage 22 is introduced into the lower chamber 16 via the space. In this case, flow resistance is applied to the working fluid while it passes through the space between the seating surface 12b and the disk valve assembly 24. On the other hand, in the compression stroke of the piston 12, i.e. when the piston moves downwardly, the outer portion of the disk valve assembly 50 is deformed due to fluid pressure in the lower chamber 16, so that the working fluid in the lower chamber 16 is introduced into the upper chamber 14 via the fluid passage 22 while flow resistance is applied to the working fluid.

Fig. 6 illustrates a second preferred embodiment of a hydraulic shock absorber according to the present invention. The construction of this embodiment is similar to that of the first embodiment except that a disk valve assembly 100 is substituted for the disk valve assembly 24. The disk valve assembly 100 comprises a plurality of elastic, annular disk plates 102, 104, 106 and 108 which will be referred to herebelow as "first constant orifice plate", "first disk plate", "second constant orifice plate" and "second disk plate", respectively. The first constant orifice plate 102 is disposed on the boss portion 12a and the seating surface 12b of the piston 12. The first disk plate 104 has essentially the same diameter as that of the first constant orifice plate 102, and is disposed on the first constant orifice plate 102 on the opposite side to the piston 12. The second constant orifice plate 106 has a smaller diameter than that of the first disk plate 104, and is disposed on the first disk plate 104 on the opposite side to the first constant orifice plate 102. The second disk plate 108 is essentially the same diameter as that of the first disk plate 104, and is disposed on the second constant orifice plate 106 on the opposite side to the first disk plate 104. An annular space 110 is formed between the first and second disk plates 104 and 108 outside the second constant orifice plate 106.

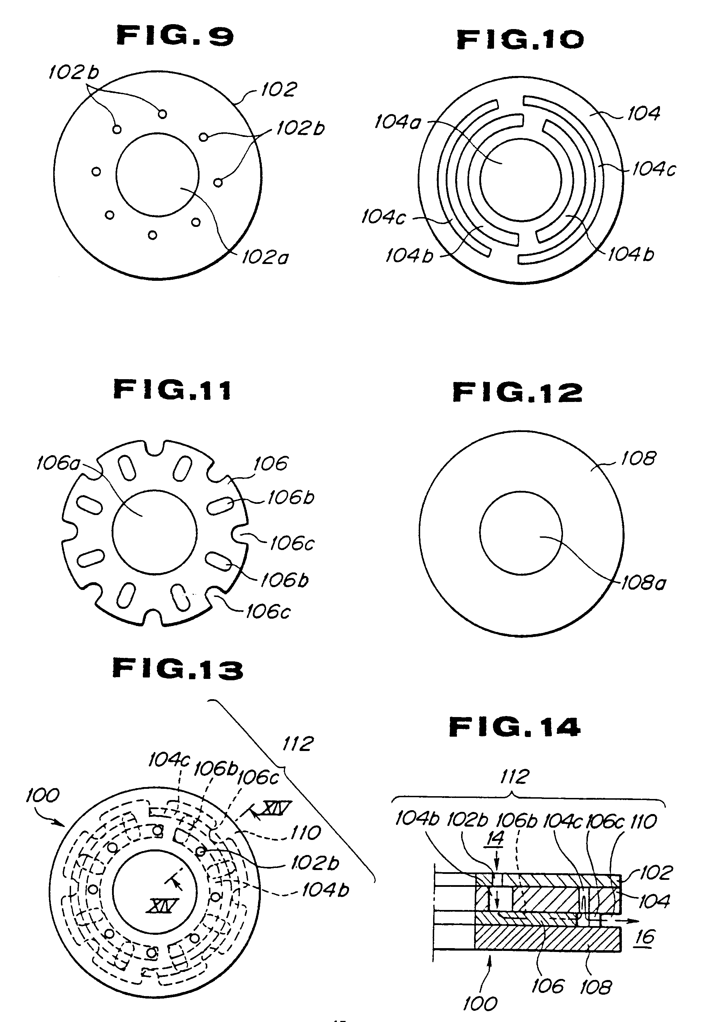

As can be seen clearly from Figs. 9 to 12, the respective disk plates 102 to 108 have circular through openings 102a, 104a, 106a and 108a at the center thereof, the diameters of which are similar to each other. As shown in Fig. 9, the first constant orifice plate 102 has a plurality of orifices 102b, which will be referred to as "first constant orifices" and which are arranged at locations neighboring the circular through opening 102a spaced at predetermined intervals. The first constant orifices 102b are designed to be in fluid communication with the fluid passage 20. As shown in Fig. 10, the first disk plate 104 has a pair of arc-shaped wider through openings 104b which are concentrically arranged at locations neighboring the circular through opening 104a so as to surround essentially the entire circumference of the circular through opening 104a. The arc-shaped wider through openings 104b are designed to be in fluid communication with the first constant orifice 102b. The first disk plate 104 also has a pair of arc-shaped narrower through openings 104c which are concentrically arranged outside the arc-shaped wider through openings 104b. The outer, narrower through openings 104c are shifted in relation to the inner, wider through openings 104b in the direction of the circumference of the first disk plate 104. As shown in Fig. 11, the second constant orifice plate 106 has a plurality of radially extending through openings 106b which are arranged at predetermined intervals and which are in fluid communication with the wider and narrower through openings 104b and 104c of the first disk plate 104. The second constant orifice plate 106 also has a plurality of U-shaped cut-outs 106c which are formed at the circumference thereof between the radially extending through openings 106b and extends radially and which are in fluid communication with the narrower through openings 104c of the first disk plate 104. As shown in Fig. 14, the first and second constant orifice plates 102 and 106 are thinner than the first and second disk plates 104 and 108. The cross-sectional area of flow passage in the radially extending through opening 106b of the second constant orifice plate 106 is designed to be less than that in the wider arc-shaped through opening 104b of the first disk plate 104, and greater than that in the narrower arc-shaped through opening 104c. That is, as shown in Fig. 14, the thickness of the second constant orifice plate 106 is designed to be less than the width of the wider arc-shaped through opening 104b and greater than the width of the narrower arc-shaped through opening 104c. In addition, the cross-sectional area of flow passage in the cut-out 106c is designed to be less than that in the narrower arc-shaped through opening 104c of the first disk plate 104. Therefore, the radially extending through opening 106b, the narrower arc-shaped through opening 104c and the U-shaped cut-out 106c serve as orifices and thus will be referred to as "second constant orifice", "third constant orifice" and "fourth constant orifice", respectively. As shown in Figs. 13 and 14, a bypassing fluid passage 112 comprising the first constant orifice 102b, the wider arc-shaped through opening 104b, the radially extending through opening 106b, the narrower arc-shaped through opening 104c, the U shaped cut-out 106c and the annular space 110, is formed in the disk valve assembly 100, and thus the communication between the upper and lower chambers 14 and 16 is established by the bypassing fluid passage 112.

With the aforementioned constructions, when the working fluid in the upper chamber 14 is introduced into the lower chamber 16 while the amplitude of the piston 12 is very small, flow resistances are applied to the working fluid at four points in the flow path by means of the first, second, third and fourth constant orifices 102b, 106b, 104c and 106c which are arranged in series. Therefore, compared with the first preferred embodiment of a hydraulic shock absorber of the invention, differences between fluid pressures before and behind each of orifices, and differences between the flow velocity before and behind the latter become smaller. As a result, compared with the first embodiment, the fluid pressure and flow velocity of the working fluid is more gradually decreased, so that it is possible to more effectively decrease flow noise of the working fluid.

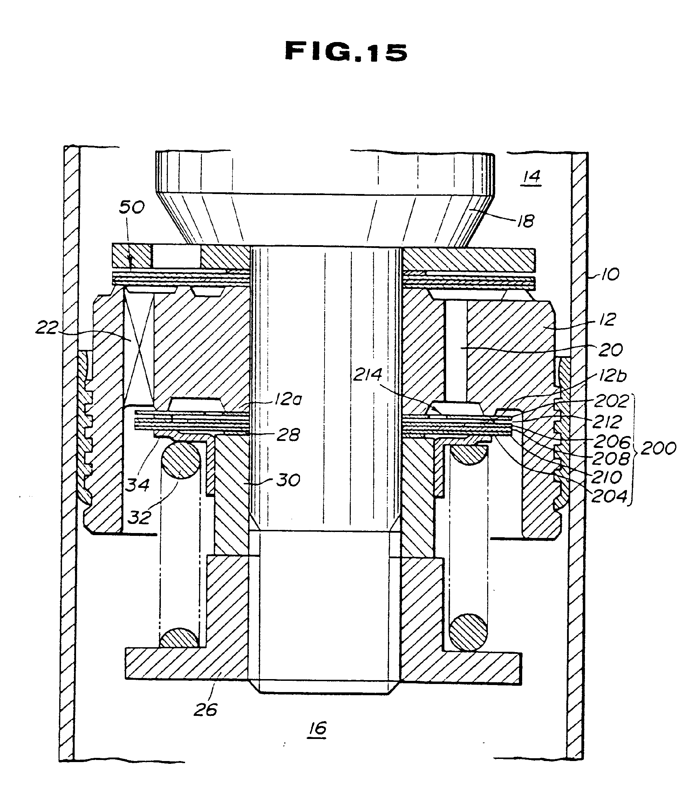

Fig. 15 illustrates a third preferred embodiment of a hydraulic shock absorber according to the present invention. The construction of this embodiment is similar to that of the first embodiment except that a disk valve assembly 200 is substituted for the disk valve assembly 24.

The disk valve assembly 200 comprises a plurality of elastic, annular disk plates 202, 204, 206, 208 and 210 which will be referred herebelow to as "first disk plate", "constant orifice plate", "second disk plate", "third disk plate" and "fourth disk plate", respectively. The first disk plate 202 is disposed on the boss portion 12a and the seating surface 12b of the piston 12. The constant orifice plate 204 has a smaller diameter than that of the first disk plate 202, and is disposed on the first disk plate 202 on the opposite side to the piston 12. The second disk plate 206 has essentially the same diameter as that of the first disk plate 202, and is disposed on the constant orifice plate 204 on the opposite side to the first disk plate 202. The third disk plate 208 has essentially the same diameter as that of the second disk plate 206, and is disposed on the second disk plate 206 on the opposite side from the constant orifice plate 204. The fourth disk plate 210 has essentially the same diameter as that of the third disk plate 208, and is disposed on the third disk plate 208 on the opposite side from the second disk plate 206. An annular space 212 is formed between the first and second disk plates 202 and 206 outside the constant orifice plate 204.

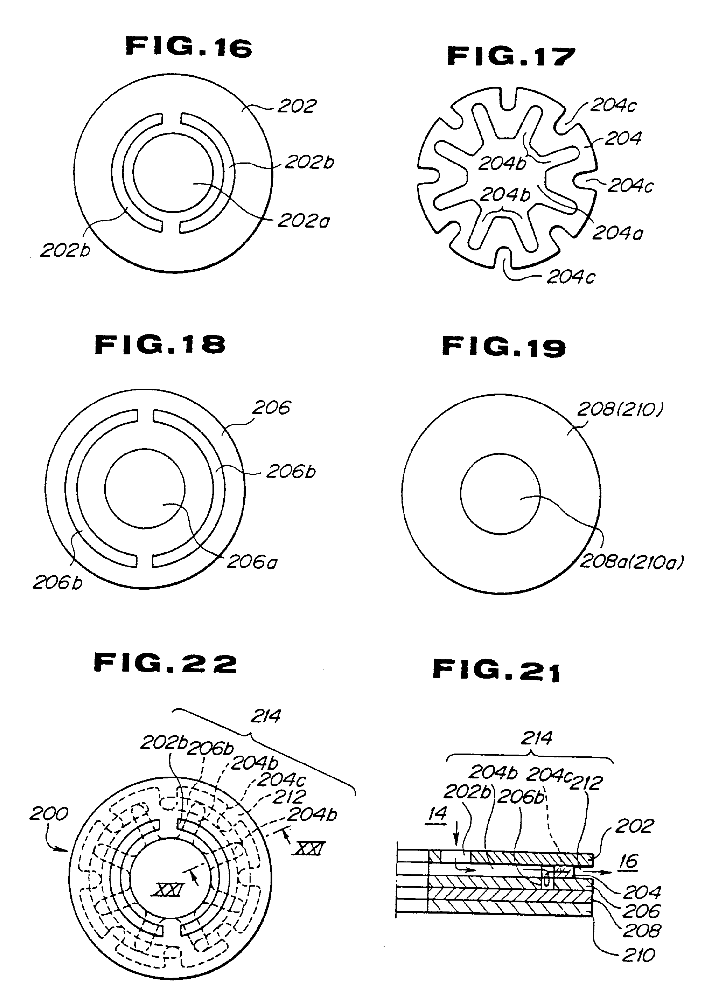

As can be seen clearly from Figs. 16 to 19, the respective disk plates 202 to 210 have circular through openings 202a, 204a, 206a, 208a and 210a at the center thereof, and these openings have essentially the same diameter. As shown in Fig. 16, the first disk plate 202 has a pair of arc-shaped through openings 202b which are concentrically arranged at locations neighboring the circular through opening 202a so as to surround essentially the entire circumference of the circular through opening 202a. The arc-shaped through openings 202b are designed to be in fluid communication with the fluid passage 20. As shown in Fig. 17, the circular through opening 204a of the constant orifice plate 204 has a plurality of radially extending portions 204b which are arranged at a predetermined interval. The radially extending portions 204b are designed to be in fluid communication with the arc-shaped through openings 202b at locations neighboring the roots thereof. The radially extending portions 204b serve as orifices and thus will be referred to as "first constant orifices". The constant orifice plate 204 also has a plurality of U-shaped cut-outs 204c which are formed at the circumference thereof between the radially extending portions 204b to extend radially. As shown in Fig. 18, the second disk plate 206 has a pair of arc-shaped through openings 206b which are so arranged as to surround essentially the entire circumference of the circular through opening 206a. The radius of curvature of the arc-shaped through opening 206b is greater than that of the arc-shaped through opening 202b of the first disk plate 202, so that the first constant orifices 204b of the constant orifice plate 204 are in fluid communication with the arc-shaped through openings 206b at locations neighboring the tips thereof. The cross-sectional area of flow passage in the arc-shaped through opening 206b of the second disk plate 206 is designed to be less than that of the first constant orifice 204b of the constant orifice plate 204, and greater than that of flow passage in the U-shaped cut-out 204c of the constant orifice plate 204. Therefore, the arc-shaped through opening 206b and the U-shaped cut-out 204c serve as orifices and thus will be referred to as "second constant orifice" and "third constant orifice", respectively. With these constructions, a bypassing fluid passage 214 comprising the arc-shaped through opening 202b, the first, second and third constant orifice 204a, 206b and 204c, and the annular space 212, is formed in the disk valve assembly 200, and thus the communication between the upper and lower chambers 14 and 16 is established by the bypassing fluid passage 214.

With the aforementioned constructions, when the working fluid in the upper chamber 14 is introduced into the lower chamber 16 while the amplitude of the piston 12 is very small, the working fluid passes through the bypassing fluid passage 214. In this case, area of the fluid passage 214 is gradually narrowed at each of the first, second and third constant orifices 204a, 206b and 204c which are arranged in series, i.e. flow resistance is applied to the working fluid at three points in its flow path by means of these orifices. Therefore, compared with the first preferred embodiment of a hydraulic shock absorber of the invention, differences between fluid pressures before and behind each of the orifices, and differences between the flow speed before and behind the latter become smaller. As a result, compared with the first embodiment, the fluid pressure and flow speed of the working fluid is more gradually decreased, so that it is possible to more effectively decrease the production of flow noise of the working fluid.

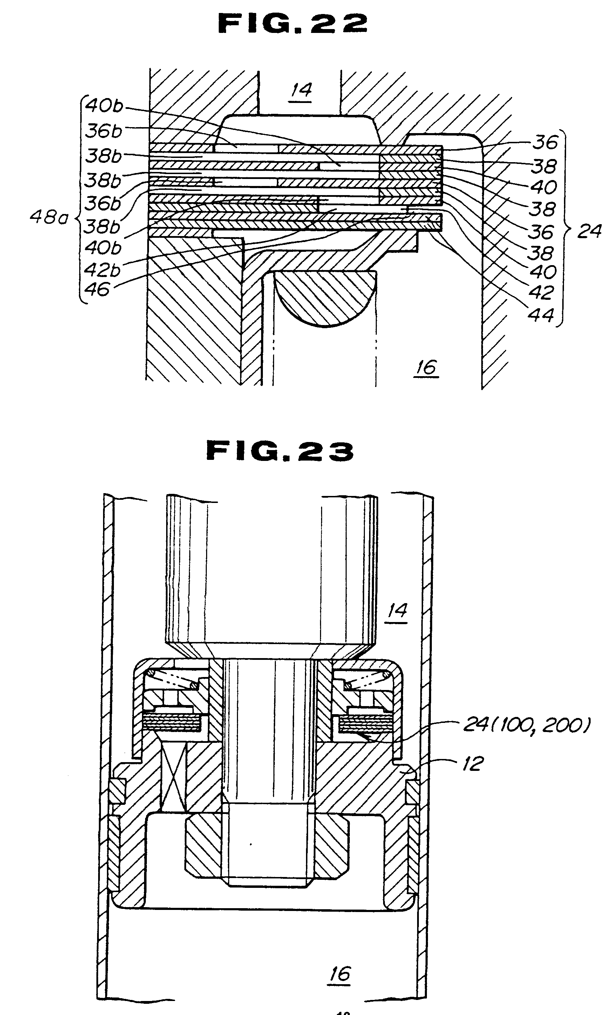

Fig. 22 illustrates a modification of the first preferred embodiment. In this case, four orifices are formed by the disk plates 36 to 44, i.e. flow passage is narrowed at four points. In accordance with fluid pressure applied to the disk valve assembly or rigidity of the elastic disk, more orifices can be formed in the disk valve assembly.

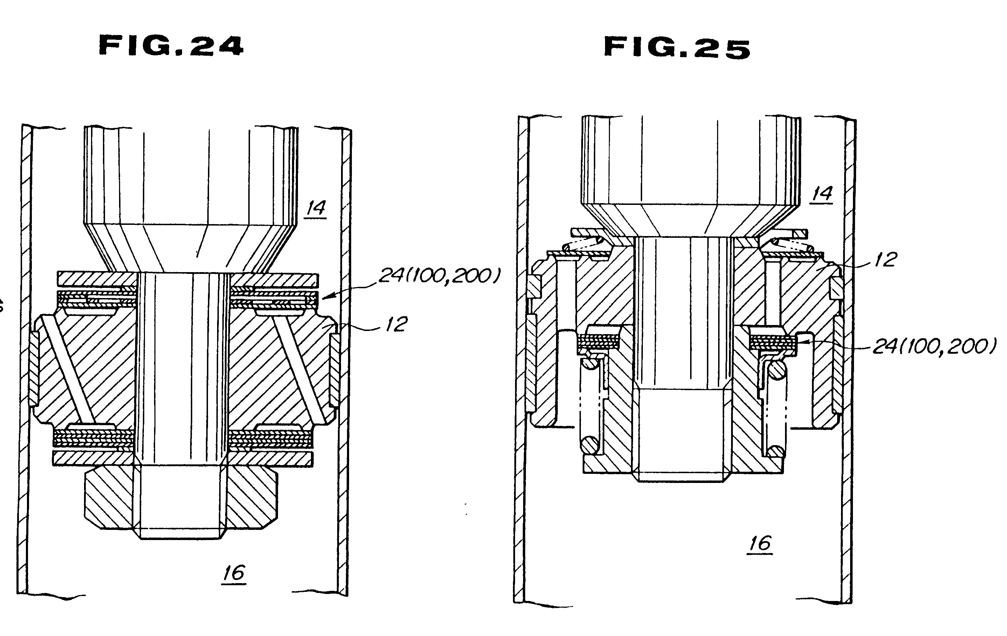

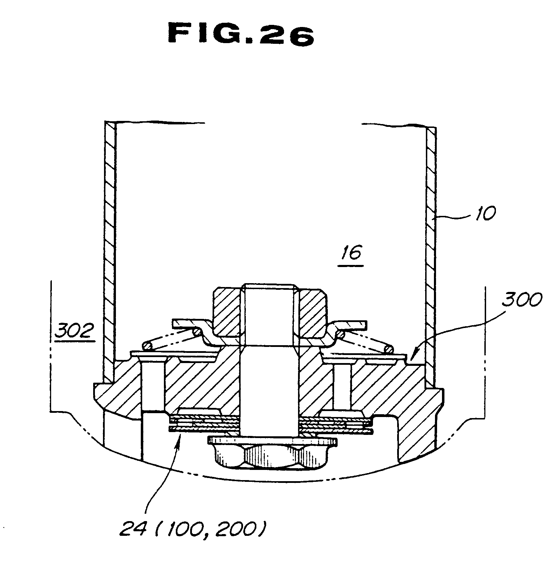

According to the present invention, as shown in Fig. 23, the disk valve assembly 24, 100 or 200 may be provided above the piston 12 in order to produce a damping force in the expansion stroke of the piston. In addition, as shown in Fig. 24, the disk valve assembly 24, 100 or 200 may be substituted for the disk valve assembly 50 in order to produce a damping force in the compression stroke of the piston. The inner portion of the disk valve assembly 24, 100 or 200 may be fixed as shown in Fig. 25. As shown in Fig. 26, the disk valve assembly 24, 100 or 200 may be provided on a base valve 300 which is provided on the bottom of the cylinder 10, so that fluid resistance may be applied to the working fluid introduced from the lower chamber 16 of the cylinder 10 to a reservoir chamber 302.

As mentioned above, according to the present invention, a bypassing fluid passage is formed in a disk valve assembly provided on a piston or base valve, so as to establish fluid communications between the upper and lower chambers of the cylinder, or between the lower chamber and the reservoir chamber. The bypassing fluid passage has a plurality of orifices which are arranged in series, so that flow resistance is applied to the working fluid at a plurality of points. Therefore, differences between pressures before and behind each of the orifices can be decreased, and flow velocity of the working fluid passing through the respective orifices is decreased. As the working fluid is introduced into the downstream chamber, fluid pressure and flow velocity of the working fluid may be gradually decreased. As a result, it is possible to prevent vortex flow and cavitation from occuring and to decrease the production of fluid noise due to vortex flow and cavitation.

## Claims

1. A shock absorber comprising: a hollow cylinder (10) defining therein a fluid chamber filled with a working fluid; a piston (12) reciprocally disposed within and dividing the fluid chamber; first and second chambers (14, 16) for the working fluid; first and second fluid passage means (20, 22) establishing fluid communication between the first and second chambers; first valve means (24, 100, 200) associated with the first fluid passage means (20), arranged to restrict the flow of the working fluid from the first chamber (14) into the second chamber (16) when the fluid pressure in the second chamber is less than a predetermined value, and to restrict the flow of the working fluid from the second chamber (16) to the first chamber (14) through the first fluid passage means (20); and second valve means (50), associated with the second fluid passage means (22) and arranged to allow the working fluid in the second chamber (16) to be introduced into the first chamber (14) when the fluid pressure in said second chamber is greater than a predetermined value, and to prevent the working fluid in the first chamber from being introduced into said second chamber through the second fluid passage means (22); wherein the first valve means comprises a disk valve assembly (24, 100, 200) having a plurality of disk plates stacked together, wherein at least one disk plate (40, 104, 206) is formed with at least one circumferentially extending arcuate opening (40b, 104c, 206b) and at least one disk plate (42, 106, 204) disposed between two adjacent disk plates is formed with at least one radially extending orifice passage (42b, 106c, 204c) that is downstream of the said arcuate opening (40b, 104c, 206b) in the flow path from the first chamber (14) to the second chamber (16); characterised in that the first and second chambers (14, 16) are the chambers either side of the piston; in that the stack of disk plates defines therein first (38b, 106b, 204b) and second (42b, 106c, 204c) radially extending orifice passages each in a disk plate (38, 42 106, 204) disposed between two adjacent disk plates; in that the said at least one arcuate opening (40b, 104c, 206b) is in a disk plate (40, 104, 206) disposed between two adjacent disk plates to form a circumferential fluid passage, in that the said circumferential fluid passage (40b, 104c, 206b) is in communication with a first radially extending orifice passage (38b, 106b, 204b) upstream of it and a second radially extending orifice passage (42b, 106c, 204c) such that the fluid flowing between the first and second chambers (14, 16) flows circumferentially along the circumferential fluid passage between the first and second radially extending orifice passages, and the flow speed and the fluid pressure of the working fluid are both decreased in a stepwise manner.

2. A shock absorber as claimed in claim 1, wherein the plurality of disk plates (24, 100, 200) comprises elastic disk plates that are deformable by fluid pressure in the first chamber (14) to allow the working fluid in the first chamber to be introduced into the second chamber (16).

3. A shock absorber comprising: a hollow cylinder (10) defining therein a fluid chamber filled with a working fluid; a piston (12) reciprocally disposed within the fluid chamber and dividing the fluid chamber into first and second chambers (14, 16) for the working fluid; a base valve (300) disposed within the fluid chamber and separating the second chamber (16) from a third chamber (302); first and second fluid passage means (20, 22) establishing fluid communication between the second and third chambers; first valve means (24, 100, 200) associated with the first fluid passage means (20), arranged to restrict the flow of the working fluid from the second chamber (16) into the third chamber (302) when the fluid pressure in the third chamber is less than a predetermined value, and to restrict the flow of the working fluid from the third chamber (302) to the second chamber (16) through the first fluid passage means (20); and second valve means (50), associated with the second fluid passage means (22) and arranged to allow the working fluid in the third chamber (302) to be introduced into the second chamber (16) when the fluid pressure in said third chamber is greater than a predetermined value, and to prevent the working fluid in the second chamber from being introduced into the third chamber through the second fluid passage means (22); wherein the first valve means comprises a disk valve assembly (24, 100, 200) having a plurality of disk plates stacked together, wherein at least one disk plate (40, 104, 206) is formed with at least one circumferentially extending arcuate opening (40b, 104c, 206b) and at least one disk plate (42, 106, 204) disposed between two adjacent disk plates is formed with at least one radially extending orifice passage (42b, 106c, 204c) that is downstream of the said arcuate opening (40b, 104c, 206b) in the flow path from the second chamber (16) to the third chamber (302); characterised in that the stack of disk plates defines therein first (38b, 106b, 204b) and second (42b, 106c, 204c) radially extending orifice passages each in a disk plate (38, 42 106, 204) disposed between two adjacent disk plates; in that the said at least one arcuate opening (40b, 104c, 206b) is in a disk plate (40, 104, 206) disposed between two adjacent disk plates to form a circumferential fluid passage, in that the said circumferential fluid passage (40b, 104c, 206b) is in communication with a first radially extending orifice passage (38b, 106b, 204b) upstream of it and a second radially extending orifice passage (42b, 106c, 204c) such that the fluid flowing between the second and third chambers (14, 16) flows circumferentially along the circumferential fluid passage between the first and second radially extending orifice passages, and the flow speed and the fluid pressure of the working fluid are both decreased in a stepwise manner.

4. A shock absorber as claimed in claim 3, wherein the plurality of disk plates (24, 100, 200) comprises elastic disk plates that are deformable by fluid pressure in the second chamber (16) to allow the working fluid in the second chamber to be introduced into the third chamber (302).

## Patentansprüche

1. Stoßdämpfer, der aufweist:
einen hohlen Zylinder (10), der darin eine Fluidkammer festlegt, die mit einem Arbeitsfluid gefüllt ist; einen Kolben (12), der hin- und herbewegbar innerhalb der Fluidkammer angeordnet ist und diese unterteilt; eine erste und eine zweite Kammer (14, 16) für das Arbeitsfluid; erste und zweite Fluiddurchgangswegeinrichtungen (20, 22), die eine Fluidverbindung zwischen der ersten und der zweiten Kammer bilden; eine erste Ventileinrichtung (24, 100, 200), die den ersten Fluiddurchgangswegeinrichtungen (20) zugeordnet ist, die so angeordnet ist, um die Strömung des Arbeitsfluids von der ersten Kammer (14) in die zweite Kammer (16) zu beschränken, wenn der Fluiddruck in der zweiten Kammer geringer als ein vorgegebener Wert ist, und um die Strömung des Arbeitsfluids von der zweiten Kammer (16) zu der ersten Kammer (14) durch die ersten Fluiddurchgangswegeinrichtungen (20) zu beschränken; und eine zweite Ventileinrichtung (50), die den zweiten Fluiddurchgangswegeinrichtungen (22) zugeordnet ist und so angeordnet ist, um dem Arbeitsfluid in der zweiten Kammer (16) zu ermöglichen, daß es in die erste Kammer (14) eingeleitet wird, wenn der Fluiddruck in der zweiten Kammer größer als ein vorgegebener Wert ist, und um zu verhindern, daß das Arbeitsfluid in der ersten Kammer in die zweite Kammer über die zweiten Fluiddurchgangswegeinrichtungen (22) eingeleitet wird; wobei die erste Ventileinrichtung eine Scheibenventilanordnung (24, 100, 200) aufweist, die eine Mehrzahl von Scheibenplatten besitzt, die zusammengestapelt sind, wobei mindestens eine Scheibenplatte (40, 104, 206) mit mindestens einer sich in Umfangsrichtung erstreckenden, bogenförmigen Öffnung (40b, 104c, 206b) ausgebildet ist und mindestens eine Scheibenplatte (42, 106, 204), die zwischen zwei benachbarten Scheibenplatten angeordnet ist, mit mindestens einem sich radial erstreckenden Öffnungsdurchgangsweg (42b, 106c, 204c) ausgebildet ist, der sich ausströmseitig der bogenförmigen Öffnung (40b, 104c, 206b) in dem Strömungsdurchgangsweg von der ersten Kammer (14) zu der zweiten Kammer (16) befindet; dadurch gekennzeichnet, daß die erste und die zweite Kammer (14, 16) die Kammern an jeder Seite des Kolbens sind; daß der Stapel der Scheibenplatten darin erste (38b, 106b, 204b) und zweite (42b, 106c, 204c) sich radial erstreckende Öffnungsdurchgangswege festlegt, wobei sich jeder in einer Scheibenplatte (38, 42, 106, 204) befindet, die zwischen zwei benachbarten Scheibenplatten angeordnet ist; daß die mindestens eine, bogenförmige Öffnung (40b, 104c, 106b) in einer Scheibenplatte (40, 104, 206) vorhanden ist, die zwischen zwei benachbarten Scheibenplatten angeordnet ist, um einen in Umfangsrichtung verlaufenden Fluiddurchgangsweg zu bilden, daß sich der in Umfangsrichtung verlaufende Fluiddurchgangsweg (40b, 104c, 206b) in Verbindung mit einem ersten, sich radial erstreckenden Öffnungsdurchgangsweg (38b, 106b, 204b) anströmseitig davon und mit einem zweiten, sich radial erstreckenden Öffnungsdurchgangsweg (42b, 106c, 204c) befindet derart, daß das Fluid, das zwischen der ersten und der zweiten Kammer (14, 16) strömt, in Umfangsrichtung entlang des umfangsmäßigen Fluiddurchgangswegs zwischen dem ersten und zweiten sich radial erstreckenden Öffnungsdurchgangsweg strömt und die Strömungsgeschwindigkeit und der Fluiddruck des Arbeitsfluids beide in einer stufenförmigen Weise herabgesetzt werden.

2. Stoßdämpfer nach Anspruch 1, dadurch gekennzeichnet, daß die Vielzahl der Scheibenplatten (24, 100, 200) elastische Scheibenplatten aufweist, die durch den Fluiddruck in der ersten Kammer (14) deformierbar sind, um dem Arbeitsfluid in der ersten Kammer zu ermöglichen, daß es in die zweite Kammer (16) eingeleitet wird.

3. Stoßdämpfer, der aufweist: einen hohlen Zylinder (10), der darin eine Fluidkammer bildet, die mit einem Arbeitsfluid gefüllt ist; einen Kolben (12), der hin- und herbewegbar innerhalb der Fluidkammer angeordnet ist und die Fluidkammer in eine erste und eine zweite Kammer (14, 16) für das Arbeitsfluid unterteilt; ein Basisventil (300), das innerhalb der Fluidkammer angeordnet ist und die zweite Kammer (16) von einer dritten Kammer (302) trennt; erste und zweite Fluiddurchgangswegeinrichtungen (20, 22), die eine Fluidverbindung zwischen der zweiten und der dritten Kammer bilden; eine erste Ventileinrichtung (24, 100, 200), die den ersten Fluiddurchgangswegeinrichtungen (20) zugeordnet ist, die so angeordnet ist, um die Strömung des Arbeitsfluids von der zweiten Kammer (16) in die dritte Kammer (302) zu beschränken, wenn der Fluiddruck in der dritten Kammer geringer als ein vorgegebener Wert ist, und um die Strömung des Arbeitsfluids von der dritten Kammer (302) zu der zweiten Kammer (16) durch die ersten Fluiddurchgangswegeinrichtungen (20) zu beschränken; und eine zweite Ventileinrichtung (50), die den zweiten Fluiddurchgangswegeinrichtungen (22) zugeordnet ist und so angeordnet ist, um dem Arbeitsfluid in der dritten Kammer (302) zu ermöglichen, daß es in die zweite Kammer (16) eingeleitet wird, wenn der Fluiddruck in der dritten Kammer größer als ein vorgegebener Wert ist, und um zu verhindern, daß das Arbeitsfluid in der zweiten Kammer in die dritte Kammer durch die zweiten Fluiddurchgangswegeinrichtungen (22) eingeleitet wird; wobei die erste Ventileinrichtung eine Scheibenventilanordnung (24, 100, 200) aufweist, die eine Mehrzahl von Scheibenplatten besitzt, die zusammen gestapelt sind, wobei mindestens eine Scheibenplatte (40, 104, 206) mit mindestens einer sich in Umfangsrichtung erstreckenden, bogenförmigen Öffnung (40b, 104c, 206b) ausgebildet ist, und mindestens eine Scheibenplatte (42, 106, 204), die zwischen zwei benachbarten Scheibenplatten angeordnet ist, mit mindestens einem, sich radial erstreckenden Öffnungsdurchgangsweg (42b, 106c, 204c) ausgebildet ist, der sich ausströmseitig der ersten, bogenförmigen Öffnung (40b, 104c, 206b) in dem Strömungsdurchgangsweg von der zweiten Kammer (16) zu der dritten Kammer (310) befindet; dadurch gekennzeichnet, daß der Stapel der Scheibenplatten darin erste (38b, 106b, 204b) und zweite (42b, 106c, 204c) sich radial erstreckende Öffnungsdurchgangswege bildet, jeder in einer Scheibenplatte (38, 42, 106, 204), die zwischen zwei benachbarten Scheibenplatten angeordnet sind; daß sich die mindestens eine bogenförmige Öffnung (40b, 104c, 206b) in einer Scheibenplatte (40, 104, 206) befindet, die zwischen zwei angrenzenden Scheibenplatten angeordnet ist, um einen in Umfangsrichtung verlaufenden Fluiddurchgangsweg zu bilden, daß der in Umfangsrichtung verlaufende Fluiddurchgangsweg (40b, 104c, 206b) eine Verbindung mit einem ersten, sich radial erstreckenden Öffnungsdurchgangsweg (38b, 106b, 204b) anströmseitig von diesem und einen zweiten, sich radial erstreckenden Öffnungsdurchgangsweg (42b, 106c, 204c) derart bildet, daß das Fluid, das zwischen der zweiten und der dritten Kammer (14, 16) strömt, in Umfangsrichtung entlang des in Umfangsrichtung verlaufenden Strömungsdurchgangswegs zwischen dem ersten und dem zweiten sich radial erstreckenden Öffnungsdurchgangsweg strömt, und die Strömungsgeschwindigkeit und der Fluiddruck des Arbeitsfluids beide in einer stufenartigen Weise herabgesetzt werden.

4. Stoßdämpfer nach Anspruch 3, dadurch gekennzeichnet, daß die Vielzahl der Scheibenplatten (24, 100, 200) elastische Scheibenplatten aufweist, die durch den Fluiddruck in der zweiten Kammer (16) deformierbar sind, um dem Arbeitsfluid in der zweiten Kammer zu ermöglichen, daß es in die dritte Kammer (302) eingeleitet wird.

## Revendications

1. Amortisseur de choc comprenant : un cylindre creux (10) définissant à l'intérieur de celui-ci une chambre de fluide remplie d'un fluide de travail; un piston (12) réciproquement disposé dans et divisant la chambre de fluide; des première et seconde chambres (14, 16) pour le fluide de travail; des premier et second moyens de passage de fluide (20, 22) établissant une communication de fluide entre les première et seconde chambres; un premier moyen de valve (24, 100, 200) associé au premier moyen de passage de fluide (20), agencé pour réduire le flux de fluide de travail depuis la première chambre (14) dans la seconde chambre (16) lorsque la pression de fluide dans la seconde chambre est inférieure à une valeur prédéterminée, et pour réduire le flux du fluide de travail depuis la seconde chambre (16) vers la première chambre (14) à travers le premier moyen de passage de fluide (20); et un second moyen de valve (50), associé au second moyen de passage de fluide (22) et agencé pour permettre au fluide de travail dans la seconde chambre (16) d'être introduit dans la première chambre (14) lorsque la pression de fluide dans ladite seconde chambre est supérieure à une valeur prédéterminée, et pour empêcher le fluide de travail dans la première chambre d'être introduit dans ladite seconde chambre à travers le second moyen de passage de fluide (22); dans lequel le premier moyen de valve comprend un assemblage de valve en disque (24, 100, 200) ayant une pluralité de plaques en disque empilées ensemble, dans lequel au moins une plaque en disque (40, 104, 206) est formée avec au moins une ouverture arquée s'étendant circonférentiellement (40b, 104c, 206b) et au moins une plaque en disque (42, 106, 204) disposée entre deux plaques en disque adjacentes est formée avec au moins un passage d'orifice s'étendant radialement (42b, 106c, 204c) qui est en aval de ladite ouverture arquée (40b, 104c, 206b) dans le trajet du flux à partir de la première chambre (14) vers la seconde chambre (16) ; caractérisé en ce que les première et seconde chambres (14, 16) sont les chambres de chaque côté du piston; en ce que l'empilement des plaques en disque y définit des premier (38b, 106b, 204b) et second (42b, 106c, 204c) passages d'orifice s'étendant radialement, chacun dans une plaque en disque (38, 42, 106, 204) disposée entre deux plaques en disque adjacentes; en ce que ladite au moins une ouverture arquée (40b, 104c, 206b) est dans une plaque en disque (40, 104, 206) disposée entre deux plaques en disque adjacentes pour former un passage de fluide circonférentiel, en ce que ledit passage de fluide circonférentiel (40b, 104c, 206b) est en communication avec un premier passage d'orifice s'étendant radialement (38b, 106b, 204b) en amont de celui-ci et un second passage d'orifice s'étendant radialement (42b, 106c, 204c) de sorte que le flux de fluide entre les première et seconde chambres (14, 16) circule circonférentiellement le long du passage du fluide ciconférentiel entre les premier et second passages d'orifice s'étendant radialement, et la vitesse d'écoulement et la pression de fluide du fluide de travail sont toutes deux diminuées par paliers.

2. Amortisseur de choc selon la revendication 1, dans lequel la pluralité de plaques en disque (24, 100, 200) comprend des plaques en disque élastiques qui sont déformables sous la pression de fluide dans la première chambre (14) pour permettre au fluide de travail dans la première chambre d'être introduit dans la seconde chambre (16).

3. Amortisseur de choc comprenant : un cylindre creux (10) définissant à l'intérieur de celui-ci une chambre de fluide remplie d'un fluide de travail; un piston (12) réciproquement disposé dans la chambre de fluide et divisant la chambre de fluide en des première et seconde chambres (14, 16) pour le fluide de travail; une valve de base (300) disposée dans la chambre de fluide et séparant la seconde chambre (16) d'une troisième chambre (302); des premiers et seconds moyens de passage de fluide (20, 22) établissant une communication de fluide entre les seconde et troisième chambres; des premiers moyens de valve (24, 100, 200) associés au premier moyen de passage de fluide (20), agencés pour réduire le flux de fluide de travail depuis la seconde chambre (16) dans la troisième chambre (302) lorsque la pression du fluide dans la troisième chambre est inférieure à une valeur prédéterminée, et pour réduire le flux du fluide de travail depuis la troisième chambre (302) vers la seconde chambre (16) à travers le premier moyen de passage de fluide (20); et des seconds moyens de valve (50), associés au second moyen de passage de fluide (22) et agencés pour permettre au fluide de travail dans la troisième chambre (302) d'être introduit dans la seconde chambre (16) lorsque la pression de fluide dans ladite troisième chambre est supérieure à une valeur prédéterminée, et pour empêcher le fluide de travail dans la seconde chambre d'être introduit dans la troisième chambre à travers les seconds moyens de passage de fluide (22); dans lequel les premiers moyens de valve comprennent un assemblage de valve en disque (24, 100, 200) ayant une pluralité de plaques en disque empilées ensemble, dans lequel au moins une plaque en disque (40, 104, 206) est formée avec au moins une ouverture arquée s'étendant circonférentiellement (40b, 104c, 206b) et au moins une plaque en disque (42, 106, 204) disposée entre deux plaques en disque adjacentes est formée avec au moins un passage d'orifice s'étendant radialement (42b, 106c, 204c) qui est en aval de ladite ouverture arquée (40b, 104c, 206b) dans le trajet du flux depuis la seconde chambre (16) vers la troisième chambre (302); caractérisé en ce que l'empilement de plaques en disque y définit des premier (38b, 106b, 204b) et second (42b, 106c, 204c) passages d'orifice s'étendant radialement, chacun dans une plaque en disque (38, 42, 106, 204) disposée entre deux plaques en disque adjacentes; en ce que ladite au moins une ouverture arquée (40b, 104c, 206b) est dans une plaque en disque (40, 104, 206) disposée entre deux plaques en disque adjacentes pour former un passage de fluide circonférentiel, en ce que ledit passage de fluide circonférentiel (40b, 104c, 206b) est en communication avec un premier passage d'orifice s'étendant radialement (38b, 106b, 204b) en amont de celui-ci et un second passage d'orifice s'étendant radialement (42b, 106c, 204c) de sorte que le fluide circulant entre les seconde et troisième chambres (14, 16) circule circonférentiellement le long du passage de fluide circonférentiel entre les premier et second passages d'orifice s'étendant radialement, et la vitesse d'écoulement et la pression de fluide du fluide de travail sont toutes deux diminuées par paliers.

4. Amortisseur de choc selon la revendication 3, dans lequel la pluralité de plaques en disque (24, 100, 200) comprend des plaques en disque élastiques qui sont déformables sous la pression du fluide dans la seconde chambre (16) pour permettre au fluide de travail dans la seconde chambre d'être introduit dans la troisième chambre (302).
